# EUROPEAN PATENT SPECIFICATION

(11) **EP 4 638 971 B1**
(45) Date of publication and mention of the grant of the patent: **28.10.2026**
(21) Application number: 23805668.3
(22) Date of filing: 24.10.2023
(51) Int. Cl.: F04D 13/06, F04D 29/58, H02K 1/28, H02K 5/128, H02K 11/33, H02K 49/10

(54) **PUMP GROUP**
PUMPENGRUPPE
GROUPE DE POMPES

(30) Priority: 22.12.2022 IT 202200026472
(43) Date of publication of application: 29.10.2025
(73) Proprietor: Industrie Saleri Italo S.P.A., 25065 Lumezzane, Brescia (IT)
(72) Inventor: MARUELLI, Fabio, 25065 Lumezzane, Brescia (IT); BETTINESCHI, Nicolò, 25065 Lumezzane, Brescia (IT); TEBALDINI, Giovanni, 25065 Lumezzane, Brescia (IT)
(74) Representative: Gamba, Alessandro
(86) International application number: PCT/IB2023/060720
(87) International publication number: WO 2024/134289

(56) References cited:
- EP-A1- 1 635 064
- EP-A1- 2 905 471
- EP-A1- 3 674 562
- EP-A1- 3 757 395
- EP-A2- 2 199 618
- DE-A1- 102010 001 212
- JP-A- 2005 180 211
- US-A1- 2014 161 630

## Description

The present invention relates to a pump group of a cooling system of a vehicle.

In this disclosure, the term "vehicle" relates to any means of locomotion, without any limitation related to type or size, i.e., a motorcar, or a tractor trailer.

In other words, the present invention relates to the automotive field and in detail to the thermal management system of an operating group of a vehicle.

In particular, in the present disclosure, "operating group" means a specific component or group of components for carrying out a given operation necessary for the motion of the vehicle. In a preferred embodiment, the "operating group" comprises the motor group, e.g., of endothermic, electric, or hybrid type.

In further constructional variants, the "operating group" comprises other vehicle components, either mechanical, such as a transmission group, or electrical, such as a "battery pack" or "electric motor", included in the vehicle.

In the prior art, multiple embodiments of pump groups for a cooling system of an operating group are known, which are distinguished by the actuation types.

Specifically, the pump group of the present invention fits into such a context, being of the electrically actuated type. In other words, the pump group of the present invention comprises at least one electric motor, which commands the rotary movement of the impeller assembly included therein, thus commanding the movement of the cooling liquid which flows in the cooling system to which the pump group is fluidly connectable.

A variety of technical solutions of pump groups comprising an electric drive with an electric motor are known.

A typical problem addressed in such products is that of achieving an effective cooling of the electrical components with particular reference to the electronic command board.

Moreover, embodiments of pump groups are known from the prior art, in which the rotor is "wet," i.e., it is in the water chamber, i.e., it is in the hydraulic part of the pump group. However, in such embodiments, a problem is that of requiring complex positioning of the blade element included in the impeller assembly and of the rotor connected thereto, the wrong position of which results in a number of inefficiency problems of the pump group. Examples of pump groups known in the prior art having one or more of the problems of above are disclosed in EP3674562A1, EP3757395A1, US2014/161630A1, DE102010001212A1, EP2905471A1, EP1635064A1 and EP2199618A2.

Therefore, it is the object of the present invention to provide a pump group for a cooling system of an operating group of a vehicle which solves such typical problems of the prior art.

This object is achieved by a pump group according to claim 1. The claims dependent thereon relate to preferred constructional variants having further advantageous aspects.

The object of the present invention will now be described in detail, with the aid of the accompanying drawings, in which:

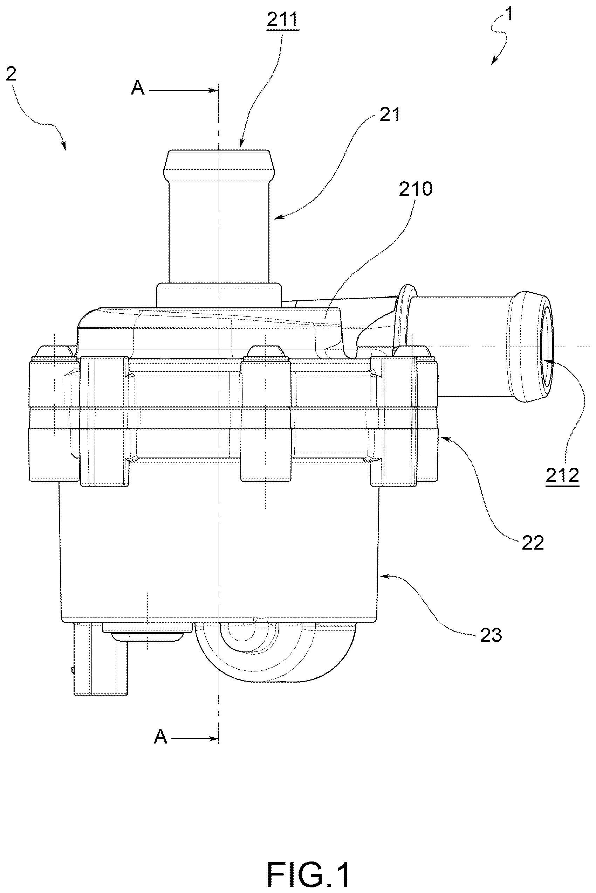

- figure 1 shows a side view of a pump group according to the present invention;

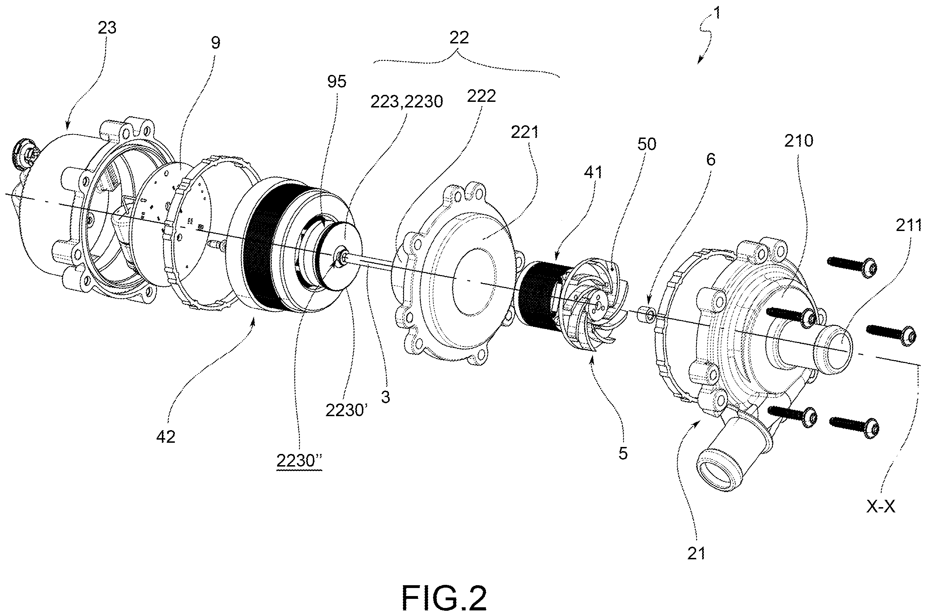

- figure 2 shows a perspective view with separate parts of the pump group in figures 1;
- figure 3 shows an axial section view of the pump group taken along the section plane A-A in figure 1;
- figure 3a shows an enlarged view of some details in figure 3.

In the aforesaid drawings, reference numeral 1 indicates as a whole a pump group for a cooling system of an operating group of a vehicle, e.g., of the internal combustion type.

The pump group 1 of the present invention extends mainly lengthwise with respect to axis X-X.

According to the present invention, the pump group 1 comprises a pump body 2 for supporting and containing the components described below. Preferably, the pump body 2 is fluidly connectable to the pipes of the cooling system, in which the cooling liquid, moved by the pump group 1, flows.

According to a preferred embodiment, the "cooling liquid" is a water-based liquid, e.g., a solution comprising water and glycol.

According to a further preferred embodiment, the "cooling liquid" is an oil-based liquid.

Said pump body 2 comprises a first element 21, an intermediate element 22, and a second element 23. In other words, the pump body 2 comprises three distinct elements, which define the pump body 2 when assembled.

According to the present invention, the coupling between the first element 21 and the intermediate element 22 delimits a first chamber 200', or wet chamber.

According to the present invention, the coupling between intermediate element 22 and second element 23 defines a second chamber 200", or dry chamber. Indeed, the two chambers are mutually sealed.

According to a preferred embodiment, the first element 21, the intermediate element 22, and the second element 23 are mutually engaged along the axis X-X, where the intermediate element 22 is sandwiched between the first element 21 and the second element 23.

According to a preferred embodiment, the first element 21 and the second element 23 are mutually engaged along the axis X-X, and the intermediate element 22 is housed in the space defined by them.

According to the present invention, said intermediate element 22 comprises a side wall 222, which extends parallel to the axis X-X, and a bottom wall 223.

According to a preferred embodiment, the bottom wall 223 comprises a metal plate 2230.

According to the invention, said metal plate 2230 is made of steel alloy, preferably a stainless-steel alloy.

According to the invention, the side wall 222 is made of a plastic material and the metal plate 2230 is integrally connected to the side wall 222 by means of a co-molding operation of the bottom wall 223 with the side wall 222.

According to the invention the metal plate 2230 of the bottom wall 223 comprises a radial edge 2230' engaging the side wall 222.

Preferably, said radial edge 2230' is knurled to facilitate the gripping of the side wall 22 in the co-molding operations.

Preferably, said radial edge 2230' comprises a step suitable for facilitating the tight fixing between the side wall 22 and the bottom wall 23.

According to an embodiment not part of the invention, the pump body 2, except for said metal plate 2230, is made of a material chosen from the polymer families.

Preferably, the pump body 2 is made of PPS GF40, PA 6.10, and PBT GF20.

According to a preferred embodiment, the pump group 1 comprises a fixed shaft 3 housed in the first chamber 200'.

Preferably, the fixed shaft 3 is made of a material chosen from steel alloys, preferably is made of chromium steel alloy.

According to the invention, the fixed shaft 3 extends along the axis X-X between a first end 31 and a second end 32 at the bottom wall 223.

According to the invention, the fixed shaft 3 is cantilevered with respect to said bottom wall 223.

According to an embodiment not part of the invention, the second end 32 engages the bottom wall by means of a geometric, interference coupling.

According to the present invention, the metal plate 2230 is at the second end 32 .

According to an embodiment not part of the invention, said metal plate 2230 comprises an opening 2230" and said second end 32 is housed in said opening 2230".

Preferably, the second end 32 is housed in said opening 2230" by means of geometric interference, i.e., by interfering with the edges of the opening 2230".

According to the invention, the fixed shaft 3 and the metal plate 2230 are a single metal component.

Furthermore, the pump group 1 comprises an electric motor 4 comprising a rotor 41, housed in the first chamber 200', and a stator 42, which axially and circumferentially surrounds the rotor 41 housed in the second chamber 200".

Preferably, said electric motor 4 is of the brushless type.

Preferably, the rotor 41 is of the permanent magnet type.

According to a preferred embodiment, the pump group 1 further comprises an impeller assembly 5 housed in the first chamber 200'.

According to an embodiment, the impeller assembly 5 is rotationally driven by the electric motor 4.

Said impeller assembly 5 comprises a blade element 50 and a rotating shaft 51 fitted onto the fixed shaft 4 engaged with the blade element 50 and the rotor 41.

In other words, the blade element 50 is engaged with said rotating shaft 51, so that the rotation of the rotating shaft 51 results in the rotation of the blade element 50.

According to a preferred embodiment, said rotating shaft 51 comprises water channels extending along the axis X-X, where the cooling liquid, passing through said water channels, reaches the bottom wall 223.

Preferably, said water channels are on the outer surface of the rotating shaft 51, i.e., facing the rotor 41.

Preferably, said water channels are on the inner surface of the rotating shaft 51, i.e. facing the fixed shaft 3.

Preferably, said water channels are inside the rotating shaft 51.

According to the present invention, the pump group 1 further comprises a fixed bushing 6, integrally engaged with the first end 31 to provide an axial stop for the impeller assembly 5.

In other words, the fixed bushing 6 is positioned to provide an upper axial stop to the axial movement of the impeller assembly 5. Indeed, the impeller assembly 5, under the action of the cooling liquid, is subject to axial movements along the fixed shaft 3. In further other words, the presence of the fixed bushing 6 on the fixed shaft 3 thus imposes the upper limit stop of said axial movement. In yet further other words, the presence of the fixed bushing 6 defines the maximum axial position of the impeller assembly 5 in the first chamber 200' .

Preferably, the fixed bushing 6 is cylindrical, conical, or flanged in shape.

Preferably, the fixed bushing 6 is fixed to the fixed shaft 3 being engaged with geometric interference therewith.

According to a preferred embodiment, the intermediate element 22 comprises a head wall 221, which is axially distal from the bottom wall 223, where the blade element 50 is positioned between said head wall 221 and the first element 21.

Preferably, the presence of the fixed bushing 6 on the fixed shaft 3 defines the maximum axial position of the blade element 50 in the space between said head wall 221 and the first element 21.

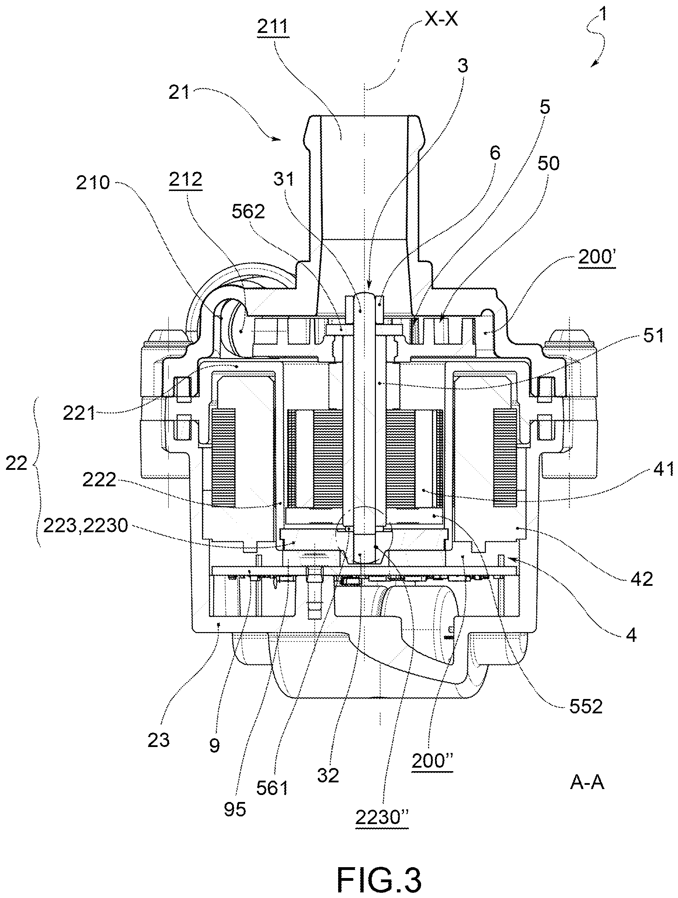

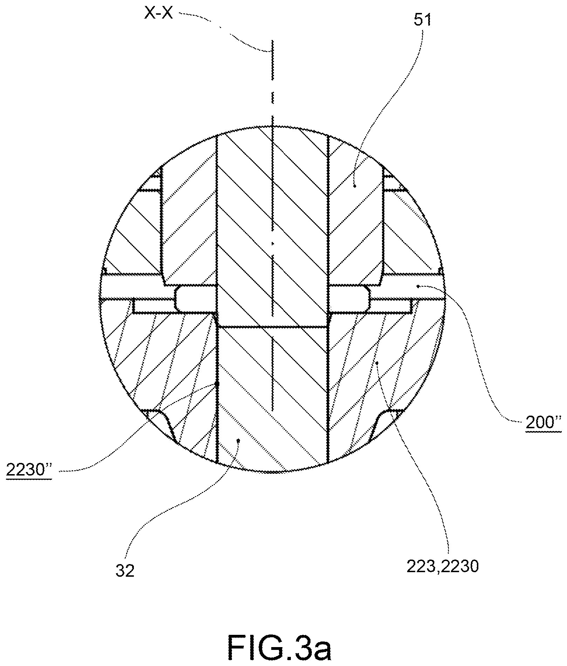

According to a preferred embodiment, the first element 21 comprises an inlet opening 211 on the axis X-X and a radial outlet 212, where the first element 21 is shaped comprising a volute 210. In a preferred embodiment, the first element 21 comprises an inlet pipe extending along the axis X-X between the inlet opening 211 and a pipe opening directly facing into the first chamber 200'. In a preferred embodiment, the first end 31 of the fixed shaft 3 is at least partially housed in the inlet pipe and/or pipe opening. In a preferred embodiment, the fixed bushings 6 engaged with the first end 31 of the fixed shaft 3 is at least partially housed in the inlet pipe and/or pipe opening. In a preferred embodiment, the first end 31 of the fixed shaft 3 is cantilevered from the bottom wall 223 of the intermediate element 22. Preferably, along the axis X-X, the impeller assembly 5 is proximal to the first end 31 of the fixed shaft 3. In a preferred embodiment, along the axis X-X, the impeller assembly 5 is proximal to the fixed bushing 6. In a preferred embodiment, along the axis X-X, a backing element 562 is engaged, e.g., axially abuts, between the fixed bushing 6 and the impeller assembly 5. Preferably, said backing element 562 has a reduced dimension along the axis X-X, such that the impeller assembly 5 is proximal to the first cantilever end 31. The aforesaid features are shown by way of example in figures 3 and 3a.

According to the invention, the pump group 1 further comprises a command unit 9 suitable for commanding the action of the stator 42 and thus the rotation of the rotor 41, where said command unit 9 is housed in the second chamber 200".

According to the invention, the command unit 9 is operatively connected to the metal plate 2230 by means of a thermally conductive connection element 95. Preferably, said thermally conductive connection element 95 is an electrical insulator. For example, the thermally conductive connection element 95 is a silicone sheet containing ceramic particles.

Preferably, the command unit 9 is an electric board operatively connected to the stator 42, e.g., by means of appropriate connections.

Innovatively, the pump group largely fulfills its intended purpose by overcoming the typical problems of the prior art.

Advantageously, indeed, the pump group has impeller assembly and rotor housed in the same chamber, both wetted by the cooling liquid.

Advantageously, the pump group solves the problem of positioning the blade element with respect to the rotation axis.

Advantageously, the pump group solves the problem of positioning the rotor with respect to the rotation axis. Advantageously, the air gap between rotor and stator is minimized, thus increasing the efficiency of the electric motor.

Advantageously, the first chamber and the second chamber are tightly divided.

Advantageously, the metal plate is tightly fixable to the side wall during the manufacturing by means of co-molding operations.

Advantageously, the metal plate facilitates the heat exchange between the first chamber and the second chamber.

Advantageously, the metal plate allows dissipating the heat developed by the command unit through the cooling liquid.

Advantageously, the metal plate is reached and wetted, and cooled, by the cooling liquid passing through the water channels on the rotating shaft. Accordingly, the metal plate is a multifunctional component, which can be sized as a function of the needs to balance the overall weight of the pump group, as a counterweight to ensure the correct cantilevered configuration of the fixed shaft. Such a problem is particularly felt in the automotive field, in which weight balancing and reduction result in lower fuel consumption and volume optimization. In addition, the metal plate acts as a heat catalyst and heat conduction element towards the chambers wetted by the cooling liquid, for example and in particular for the embodiment of the pump body made of polymer material. Such a problem is particularly felt in the automotive field, where the temperatures of the spaces and components around the pump group prevent effective thermal management.

Advantageously, the positioning of the fixed shaft is certain over time.

Advantageously, the blade element is positionable so as to have a minimum axial position and a maximum axial position that are certain and clear over time.

Advantageously, the pump group is quiet, having solved the problem of the noise caused by the incorrect positioning of the blade element.

Advantageously, the pump group has a simple construction.

It is apparent that, in order to meet contingent needs, those skilled in the art may make changes to the above-described invention, all contained within the scope of protection as defined by the following claims.

## Claims

1. A pump group (1) for a cooling system of an operating group of a vehicle, which extends with respect to an axis (X-X) and comprises:
i) a pump body (2) comprising a first element (21), an intermediate element (22), and a second element (23), wherein the coupling between the first element (21) and the intermediate element (22) delimits a first chamber (200'), or wet chamber, wherein the coupling between the intermediate element (22) and the second element (23) defines a second chamber (200"), or dry chamber, wherein said intermediate element (22) comprises a side wall (222) extending parallel to the axis (X-X) and a bottom wall (223);
ii) a fixed shaft (3), housed in the first chamber (200'), which extends along the axis (X-X) between a first end (31) and a second end (32);
iii) an electric motor (4) comprising a rotor (41), housed in the first chamber (200') and a stator (42), housed in the second chamber (200"), which axially and circumferentially surrounds the rotor (41);
iv) an impeller assembly (5), housed in the first chamber (200'), comprising a blade element (50) and a rotating shaft (51) fitted onto the fixed shaft (3) and engaged with both the blade element (50) and the rotor (41);
wherein the pump group (1) is **characterized in that** it further comprises a fixed bushing (6), preferably cylindrical, or conical, or flanged in shape, solidly connected to the first end (31) to provide the impeller assembly (5) with an axial stop;
wherein the side wall (222) is made of a plastic material;
wherein the bottom wall (223) comprises a metal plate (2230), preferably made of alloy steel, preferably stainless alloy steel, comprising a radial edge (2230') engaging the side wall (222) by means of a co-molding operation of the bottom wall (223) with the side wall (222);
and wherein the fixed shaft (3) is cantilevered with respect to said bottom wall (223), wherein said metal plate (2230) is at the second end (32) of the fixed shaft (3) , wherein the fixed shaft (3) and the metal plate (2230) are a single metal component; wherein the pump group (1) further comprises a command unit (9) suitable for commanding the action of the stator (42) and thus the rotation of the rotor (41), wherein said command unit (9) is housed in the second chamber (200"), wherein said command unit (9) is operatively connected to the metal plate (2230) by means of a thermally conductive connection element (95), for example a silicone sheet containing ceramic particles.

2. Pump group (1) according to any one of the preceding claims, wherein the side wall (22) is made of a plastic material, wherein the metal plate (2230) is integrally connected to the side wall (22) by means of a co-molding operation of the bottom wall (23) with the side wall (22).

3. Pump group (1) according to any one of the preceding claims, wherein the fixed shaft (3) is made of a material chosen from alloys steel, preferably it is made of chromium alloy steel.

4. Pump group (1) according to any one of the preceding claims, wherein the intermediate element (22) comprises a head wall (221), which is axially distal from the bottom wall (223), wherein the blade element (50) is positioned between said head wall (221) and the first element (21).

5. Pump group (1) according to any one of the preceding claims, wherein the first element (21) comprises an inlet opening (211) on the axis (X-X) and a radial outlet (212), wherein the first element (21) is shaped comprising a volute (210).

6. Pump group (1) according to any one of the preceding claims, wherein the first element (21), the intermediate element (22) and the second element (23) are mutually engaged along the axis (X-X), wherein the intermediate element (22) is sandwiched between the first element (21) and the second element (23).

7. Pump group (1) according to any one of the preceding claims, wherein the rotating shaft (51) comprises water channels extending along the axis (X-X), wherein the cooling liquid, passing through said water channels, reaches the bottom wall (223).

## Patentansprüche

1. Pumpengruppe (1) für ein Kühlsystem einer Betriebsgruppe eines Fahrzeugs, die sich in Bezug auf eine Achse (X-X) erstreckt und umfasst:
i) einen Pumpenkörper (2), der ein erstes Element (21), ein Zwischenelement (22) und ein zweites Element (23) umfasst, wobei die Kopplung zwischen dem ersten Element (21) und dem Zwischenelement (22) eine erste Kammer (200'), oder Nasskammer, begrenzt, wobei die Kopplung zwischen dem Zwischenelement (22) und dem zweiten Element (23) eine zweite Kammer (200"), oder Trockenkammer, definiert, wobei das Zwischenelement (22) eine Seitenwand (222), die sich parallel zur Achse (X-X) erstreckt, und eine Bodenwand (223) umfasst;
ii) eine feststehende Welle (3), die in der ersten Kammer (200') untergebracht ist und sich entlang der Achse (X-X) zwischen einem ersten Ende (31) und einem zweiten Ende (32) erstreckt;
iii) einen Elektromotor (4), der einen Rotor (41), der in der ersten Kammer (200') untergebracht ist, und einen Stator (42), der in der zweiten Kammer (200") untergebracht ist und den Rotor (41) axial und umlaufend umgibt, umfasst;
iv) eine Impelleranordnung (5), die in der ersten Kammer (200') untergebracht ist und ein Flügelelement (50) und eine drehende Welle (51) umfasst, die auf der feststehenden Welle (3) montiert ist und sowohl mit dem Flügelelement (50) als auch mit dem Rotor (41) in Eingriff steht;
wobei die Pumpengruppe (1) **dadurch gekennzeichnet ist, dass** sie ferner eine feststehende Buchse (6) umfasst, die vorzugsweise zylindrisch, konisch oder geflanscht ausgebildet ist und fest mit dem ersten Ende (31) verbunden ist, um für die Impelleranordnung (5) einen axialen Anschlag bereitzustellen;
wobei die Seitenwand (222) aus einem Kunststoffmaterial besteht;
wobei die Bodenwand (223) eine Metallplatte (2230) umfasst, die vorzugsweise aus legiertem Stahl, vorzugsweise aus rostfreiem legiertem Stahl, besteht und eine radiale Kante (2230') umfasst, die mit der Seitenwand (222) mittels eines Co-Molding-Vorgangs der Bodenwand (223) mit der Seitenwand (222) in Eingriff steht;
und wobei die feststehende Welle (3) in Bezug auf die Bodenwand (223) freitragend ist, wobei sich die Metallplatte (2230) am zweiten Ende (32) der feststehenden Welle (3) befindet, wobei die feststehende Welle (3) und die Metallplatte (2230) eine einzelne Metallkomponente sind; wobei die Pumpengruppe (1) ferner eine Steuereinheit (9) umfasst, die dazu geeignet ist, den Betrieb des Stators (42) und somit die Drehung des Rotors (41) zu steuern, wobei die Steuereinheit (9) in der zweiten Kammer (200") untergebracht ist, wobei die Steuereinheit (9) mit der Metallplatte (2230) mittels eines wärmeleitenden Verbindungselements (95), beispielsweise einer Silikonfolie mit Keramikpartikeln, wirkverbunden ist.

2. Pumpengruppe (1) nach einem der vorhergehenden Ansprüche, wobei die Seitenwand (22) aus einem Kunststoffmaterial besteht, wobei die Metallplatte (2230) mit der Seitenwand (22) mittels eines Co-Molding-Vorgangs der Bodenwand (23) mit der Seitenwand (22) einstückig verbunden ist.

3. Pumpengruppe (1) nach einem der vorhergehenden Ansprüche, wobei die feststehende Welle (3) aus einem Material besteht, das aus legiertem Stahl ausgewählt ist, vorzugsweise aus chromlegiertem Stahl besteht.

4. Pumpengruppe (1) nach einem der vorhergehenden Ansprüche, wobei das Zwischenelement (22) eine Kopfwand (221) umfasst, die axial distal zur Bodenwand (223) angeordnet ist, wobei das Flügelelement (50) zwischen der Kopfwand (221) und dem ersten Element (21) positioniert ist.

5. Pumpengruppe (1) nach einem der vorhergehenden Ansprüche, wobei das erste Element (21) eine Einlassöffnung (211) auf der Achse (X-X) und einen radialen Auslass (212) umfasst, wobei das erste Element (21) so geformt ist, dass es eine Spirale (210) umfasst.

6. Pumpengruppe (1) nach einem der vorhergehenden Ansprüche, wobei das erste Element (21), das Zwischenelement (22) und das zweite Element (23) entlang der Achse (X-X) miteinander in Eingriff stehen, wobei das Zwischenelement (22) zwischen dem ersten Element (21) und dem zweiten Element (23) sandwichartig angeordnet ist.

7. Pumpengruppe (1) nach einem der vorhergehenden Ansprüche, wobei die drehende Welle (51) Wasserkanäle umfasst, die sich entlang der Achse (X-X) erstrecken, wobei die Kühlflüssigkeit beim Durchgang durch die Wasserkanäle die Bodenwand (223) erreicht.

## Revendications

1. Groupe de pompage (1) pour un système de refroidissement d'un groupe de fonctionnement d'un véhicule, qui s'étend par rapport à un axe (X-X) et comprend :
i) un corps de pompe (2) comprenant un premier élément (21), un élément intermédiaire (22) et un deuxième élément (23), dans lequel le couplage entre le premier élément (21) et l'élément intermédiaire (22) délimite une première chambre (200'), ou chambre humide, dans lequel le couplage entre l'élément intermédiaire (22) et le deuxième élément (23) définit une deuxième chambre (200"), ou chambre sèche, dans lequel ledit élément intermédiaire (22) comprend une paroi latérale (222) s'étendant parallèlement à l'axe (X-X) et une paroi de fond (223) ;
ii) un arbre fixe (3), logé dans la première chambre (200'), qui s'étend le long de l'axe (X-X) entre une première extrémité (31) et une deuxième extrémité (32) ;
iii) un moteur électrique (4) comprenant un rotor (41), logé dans la première chambre (200') et un stator (42), logé dans la deuxième chambre (200"), qui entoure axialement et circonférentiellement le rotor (41) ;
iv) un ensemble roue (5), logé dans la première chambre (200'), comprenant un élément de pale (50) et un arbre rotatif (51) monté sur l'arbre fixe (3) et engagé à la fois avec l'élément de pale (50) et le rotor (41) ;
dans lequel le groupe de pompage (1) est **caractérisé en ce qu'**il comprend en outre une douille fixe (6), de préférence de forme cylindrique, conique ou à bride, solidement reliée à la première extrémité (31) pour fournir à l'ensemble roue (5) une butée axiale ;
dans lequel la paroi latérale (222) est constituée d'une matière plastique ;
dans lequel la paroi de fond (223) comprend une plaque métallique (2230), de préférence en acier allié, de préférence en acier inoxydable, comprenant un bord radial (2230') engageant la paroi latérale (222) au moyen d'une opération de co-moulage de la paroi de fond (223) avec la paroi latérale (222) ;
et dans lequel l'arbre fixe (3) est en porte-à-faux par rapport à ladite paroi de fond (223), dans lequel ladite plaque métallique (2230) se trouve à la deuxième extrémité (32) de l'arbre fixe (3), dans lequel l'arbre fixe (3) et la plaque métallique (2230) sont un seul composant métallique ; dans lequel le groupe de pompage (1) comprend en outre une unité de commande (9) appropriée pour commander l'action du stator (42) et donc la rotation du rotor (41), dans lequel ladite unité de commande (9) est logée dans la deuxième chambre (200"), dans lequel ladite unité de commande (9) est fonctionnellement reliée à la plaque métallique (2230) au moyen d'un élément de liaison thermoconducteur (95), par exemple une feuille de silicone contenant des particules de céramique.

2. Groupe de pompage (1) selon l'une quelconque des revendications précédentes, dans lequel la paroi latérale (22) est constituée d'une matière plastique, dans lequel la plaque métallique (2230) est reliée d'un seul tenant à la paroi latérale (22) au moyen d'une opération de co-moulage de la paroi de fond (23) avec la paroi latérale (22).

3. Groupe de pompage (1) selon l'une quelconque des revendications précédentes, dans lequel l'arbre fixe (3) est constitué d'un matériau choisi parmi les aciers alliés, de préférence il est en acier allié au chrome.

4. Groupe de pompage (1) selon l'une quelconque des revendications précédentes, dans lequel l'élément intermédiaire (22) comprend une paroi de tête (221), qui est axialement distale de la paroi de fond (223), dans lequel l'élément de pale (50) est positionné entre ladite paroi de tête (221) et le premier élément (21).

5. Groupe de pompage (1) selon l'une quelconque des revendications précédentes, dans lequel le premier élément (21) comprend une ouverture d'entrée (211) sur l'axe (X-X) et une sortie radiale (212), dans lequel le premier élément (21) est conformé de manière à comprendre une volute (210).

6. Groupe de pompage (1) selon l'une quelconque des revendications précédentes, dans lequel le premier élément (21), l'élément intermédiaire (22) et le deuxième élément (23) sont mutuellement engagés le long de l'axe (X-X), dans lequel l'élément intermédiaire (22) est pris en sandwich entre le premier élément (21) et le deuxième élément (23).

7. Groupe de pompage (1) selon l'une quelconque des revendications précédentes, dans lequel l'arbre rotatif (51) comprend des canaux d'eau s'étendant le long de l'axe (X-X), dans lequel le liquide de refroidissement, passant à travers lesdits canaux d'eau, atteint la paroi de fond (223).
